# EUROPEAN PATENT APPLICATION

(11) **EP 1 486 534 A1**
(43) Date of publication of application: **15.12.2004**
(21) Application number: 04253416.4
(22) Date of filing: 09.06.2004
(51) Int. Cl.: C08L 71/02, C08G 65/00, C08G 65/336

(54) **Adhesive compositions, their preparation and use**

(30) Priority: 09.06.2003 JP 2003163798
(71) Applicant: SHIN-ETSU CHEMICAL CO., LTD., Chiyoda-ku, Tokyo (JP)
(72) Inventor: Shiono, Mikio c/o Silicone-Electronics Materials, Usui-gun Gunma-Ken (JP)
(74) Representative: Stoner, Gerard Patrick

(57) **Abstract**

An adhesive composition contains specific amounts of a linear polyfluoro compound having at least two alkenyl groups and a main chain with a perfluoropolyether structure, a fluorine-bearing organohydrogensiloxane having at least two silicon-bonded hydrogens, a platinum group compound, a hydrophobic silica powder, an isocyanurate bearing at least one epoxy group and/or trialkoxysilyl group bonded indirectly to a nitrogen atom, and an organosiloxane bearing a silicon-bonded hydrogen and at least one epoxy group and/or trialkoxysilyl group indirectly bonded to a silicon atom. The composition, when heated for a short period of time, has an excellent adhesion to a broad range of substrates and provides a coat of uniform thickness.

## Description

The present invention relates to adhesive compositions which form fluoroelastomers when cured and which adhere firmly to various types of substrates, including metals and plastics, during curing. The invention relates in particular to adhesive compositions which, in coating applications, are able to provide a smooth surface and a uniform coat thickness.

### BACKGROUND

Fluoroelastomer compositions which can be cured by an addition reaction between alkenyl groups and hydrosilyl groups have been known for some time. Related compositions imparted with self-adhesiveness by additionally including, as a third component, an organopolysiloxane bearing hydrosilyl groups and epoxy and/or trialkoxysilyl groups, have also been proposed (JP-A 9-95615). These latter compositions can be cured by a short period of heating to give a cured product having excellent solvent resistance, chemical resistance, heat resistance and low temperature properties, low moisture transmission and excellent electrical characteristics. Such compositions are used in adhesive applications within a variety of fields where these properties are required. They see particularly frequent use in sealing applications for electrical and electronic components in the automotive industry.

Owing to stress relaxation by the elastomer, such compositions are useful as adhesive seals between like or unlike materials. However, when these compositions are employed as, for example, protective coatings for substrates on which electrical or electronic devices have been mounted, a cured coat that is thicker may lack a smooth surface and a uniform thickness, which can result in a variable degree of protection from one coating site to another. Because such protective coatings for electrical and electronic components are required to provide long-lasting protection, there exists a need for adhesive compositions which exhibit good adhesion to a broad range of substrates, including metals and plastics, and which also provide a cured coat of uniform thickness.

It is therefore an object here to provide new and useful adhesive compositions which, in cured form, exhibit good solvent resistance, chemical resistance, heat resistance and low-temperature properties, low moisture transmission and good electrical characteristics, and which are curable, e.g. by heating for a short time, to coats that have good adhesion to a range of substrates, including metals and plastics, and good thickness uniformity.

The inventors have discovered that such results can be achieved with addition reaction-curable compositions of (A) a linear polyfluoro compound having at least two alkenyl groups per molecule and a main chain that includes a perfluoropolyether structure, (B) a fluorine-bearing organohydrogensiloxane having at least two silicon-bonded hydrogen atoms per molecule and (C) a platinum group compound, to which have been added: (D) a hydrophobic silica powder, (E) an isocyanurate bearing at least one group per molecule selected from among epoxy groups and trialkoxysilyl groups which is bonded through an intervening carbon atom to a nitrogen atom, and (F) an organosiloxane bearing on each molecule a silicon-bonded hydrogen atom and at least one group selected from among epoxy groups and trialkoxysilyl groups which is bonded to a silicon atom through an intervening carbon atom or through intervening carbon and oxygen atoms.

Accordingly, the invention provides an adhesive composition which includes (A) a linear polyfluoro compound bearing at least two alkenyl groups per molecule and a main chain that includes a perfluoropolyether structure, (B) a fluorine-bearing organohydrogensiloxane having at least two silicon-bonded hydrogen atoms per molecule, (C) a platinum group compound, (D) a hydrophobic silica powder, (E) an isocyanurate bearing at least one group per molecule selected from among epoxy groups and trialkoxysilyl groups which is bonded through an intervening carbon atom to a nitrogen atom, and (F) an organosiloxane bearing on each molecule a silicon-bonded hydrogen atom and at least one group selected from among epoxy groups and trialkoxysilyl groups which is bonded to a silicon atom through an intervening carbon atom or through intervening carbon and oxygen atoms.

Methods of making the compositions, their use to make articles comprising the corresponding cured rubber, e.g. by coating, and corresponding articles are other aspects of the invention.

### FURTHER EXPLANATIONS; OPTIONS AND PREFERENCES

### Component A

Component A is a linear polyfluoro compound having at least two alkenyl groups per molecule, and preferably is of general formula (1) below.

CH₂=CH-(X)ₐ-Rf¹-(X')ₐ-CH=CH₂ (1)

In formula (1), X is -CH₂-, -CH₂O-, -CH₂OCH₂- or -Y-NR-CO-, Y being -CH₂- or an o-, m- or p-dimethylsilylphenylene group of structural formula (Z) 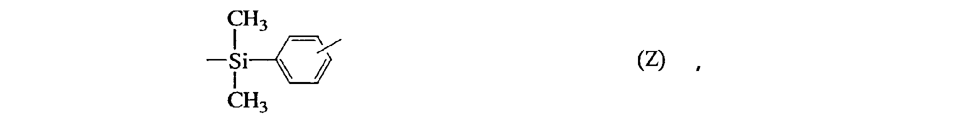 and R being hydrogen or a substituted or unsubstituted monovalent hydrocarbon group. X' is -CH₂-, -OCH₂-, -CH₂OCH₂- or -CO-NR-Y'-, Y' being -CH₂- or an o-, m- or p-dimethylsilylphenylene group of structural formula (Z') 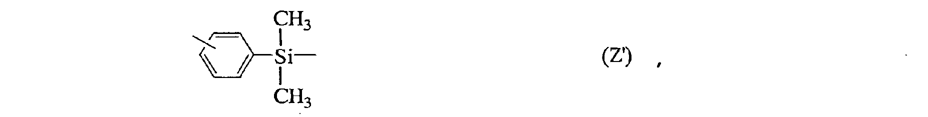 and R being as defined above. Rf¹ is a divalent perfluoropolyether group, and each occurrence of the letter a is independently 0 or 1.

When R is not a hydrogen, it may be a monovalent hydrocarbon group having generally 1 to 12 carbons, and preferably 1 to 10 carbons. Specific examples include alkyl groups such as methyl, ethyl, propyl, butyl, hexyl, cyclohexyl and octyl; aryl groups such as phenyl and tolyl; aralkyl groups such as benzyl and phenylethyl; and substituted monovalent hydrocarbon groups in which one or more or all hydrogen atoms on the group are substituted with halogen atoms such as fluorine.

Here, Rf¹ in the general formula is a divalent perfluoropolyether structure, preferably one of general formula (i) 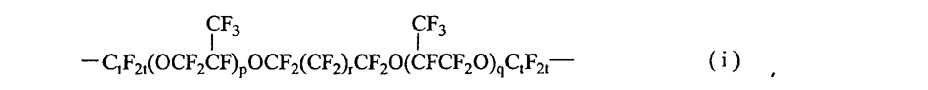 wherein the letters p and q are integers from 1 to 150 such that the average of the sum p+q is from 2 to 200, the letter r is an integer from 0 to 6 and the letter t is 2 or 3; or one of general formula (ii) 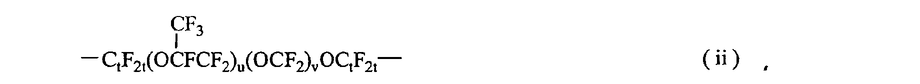 wherein the letter u is an integer from 1 to 200, the letter v is an integer from 1 to 50 and the letter t is as defined above.

Preferred examples of the Rf¹ group include those of the following formulas: 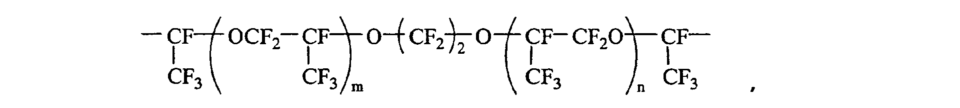 wherein the letters m and n are each a positive integer larger than 0, such that the average of the sum m+n is from 2 to 200; 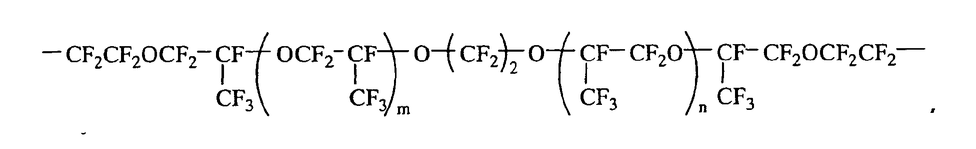 wherein the letters m and n are each a positive integer larger than 0, such that the average of the sum m+n is from 2 to 200; and 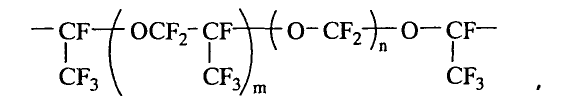 wherein m is an integer from 1 to 200, and n is an integer from 1 to 50.
Divalent groups having the first of the above three formulas are especially preferred.

Preferred examples of component A include compounds of general formula (1') below 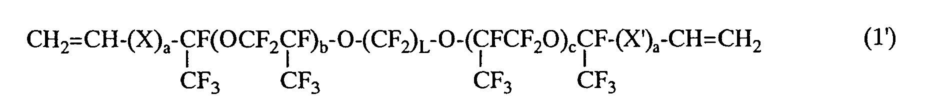 In formula (1'), X is -CH₂-, -CH₂O-, -CH₂OCH₂- or -Y-NR¹-CO-, Y being -CH₂- or an o-, m- or p-dimethylsilylphenylene group of structural formula (Z) 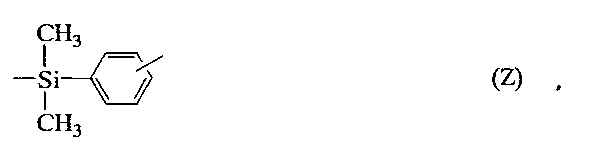 and R¹ being hydrogen, methyl, phenyl or allyl. X' is -CH₂-, -OCH₂-, -CH₂OCH₂- or -CO-NR¹-Y'-, Y' being -CH₂- or an o-, m-or p-dimethylsilylphenylene group of structural formula (Z') 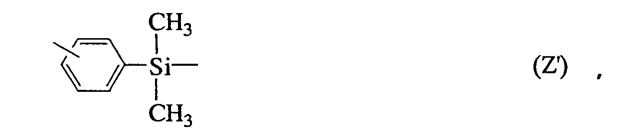 and R¹ being as defined above. Moreover, each occurrence of the letter a is independently 0 or 1, L is an integer from 2 to 6, and the letters b and c are each integers from 0 to 200.

Specific examples of linear polyfluoro compounds of general formula (1) include the compounds having the following formulas 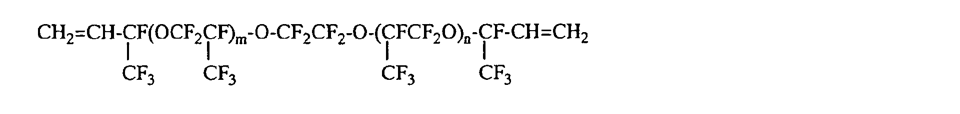 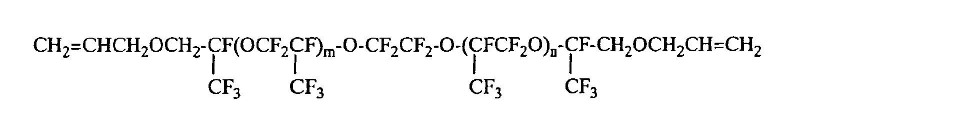 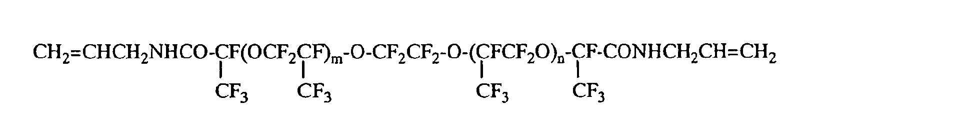 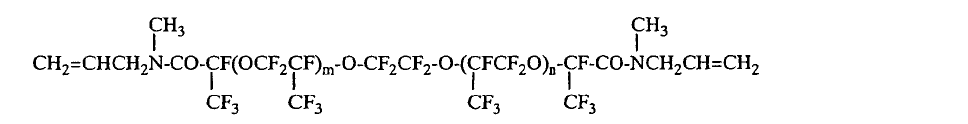 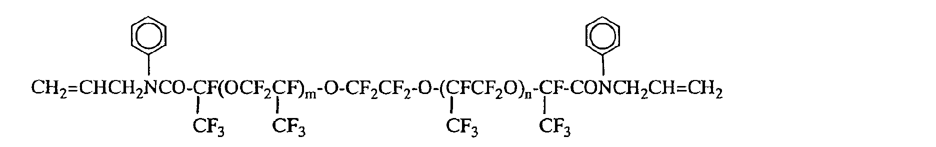 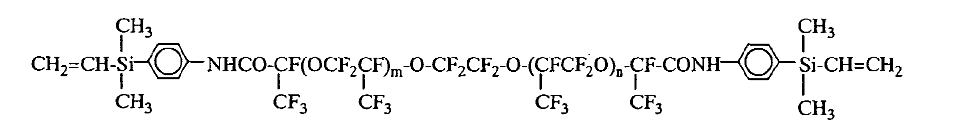 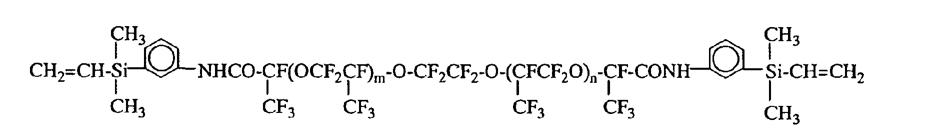 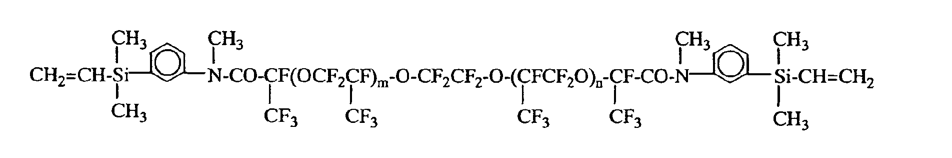 In the above formulas, the letters m and n are each integers from 0 to 200, such that the sum m+n is from 6 to 200.

For the composition to have suitable physical properties when used for such purposes as sealing, potting, coating and impregnation, and also in the cured form, it is desirable that the linear polyfluoro compound e.g. of above general formula (1) has a viscosity at 23°C in a range of 100 to 100,000 mPa·s, preferably 500 to 50,000 mPa·s, and even more preferably 1,000 to 20,000 mPa·s. The most suitable viscosity for the intended application can be selected from within this viscosity range.

The linear polyfluoro compounds may be used singly or as a combination of two or more thereof.

### Component B

Component B is a fluorine-bearing organohydrogensiloxane having at least two silicon-bonded hydrogen atoms (sometimes referred to below as hydrosilyl groups, or SiH groups) per molecule. In the inventive composition, component B functions as a crosslinking agent or chain extender for component A. For good compatibility with component A, dispersibility, and uniformity after curing, it is preferable for component B to have on the molecule at least one fluorine-bearing group selected from among monovalent perfluoroalkyl groups, monovalent perfluorooxyalkyl groups, divalent perfluoroalkylene groups and divalent perfluorooxyalkylene groups.

Illustrative examples of such fluorine-bearing groups include those of the following general formulas:

C_{g}F_{2g+1}-

(wherein the letter g is an integer from 1 to 20, and preferably from 2 to 10),

- C_{g}F_{2g}-

(wherein the letter g is an integer from 1 to 20, and preferably from 2 to 10), 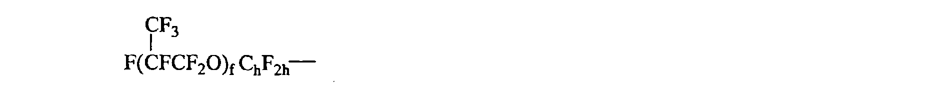 (wherein the letter f is an integer from 2 to 200, and preferably from 2 to 200, and the letter h is an integer from 1 to 3), 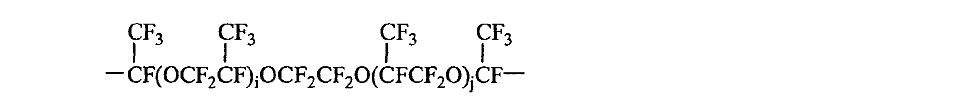 (wherein the letters i and j are each a positive integer larger that 0, such that the average of the sum i+j is from 2 to 200, and preferably from 2 to 100), and

- (CF₂O)ᵣ-(CF₂CF₂O)ₛ-CF₂-

(wherein the letters r and s are each an integer from 1 to 50).

Divalent linkages for connecting the above perfluoroalkyl groups, perfluorooxyalkyl groups, perfluoroalkylene groups or perfluorooxyalkylene groups with silicon atoms include alkylene groups, arylene groups and combinations thereof, as well as any of these together with an intervening ether-bonding oxygen atom, amide linkage or carbonyl linkage. Specific examples include those having 2 to 12 carbons, such as

- CH₂CH₂-,

- CH₂CH₂CH₂-,

- CH₂CH₂CH₂OCH₂-,

- CH₂CH₂CH₂-NH-CO-,

-CH₂CH₂CH₂-N(Ph)-CO-

(where Ph stands for phenyl),

-CH₂CH₂CH₂-N(CH₃)-CO- and

-CH₂CH₂CH₂-O-CO-.

Illustrative examples of component B having such fluorine-bearing groups include the following compounds. These compounds may be used singly or as combinations of two or more thereof. In the formulas shown below, "Me" stands for methyl and "Ph" stands for phenyl.

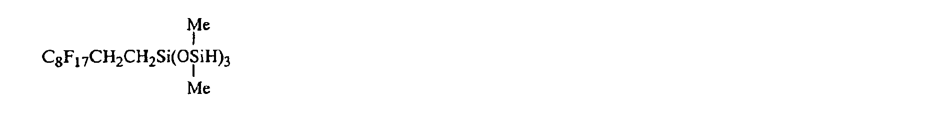

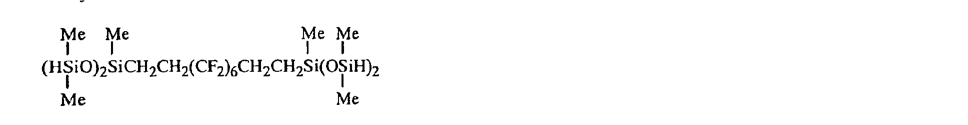

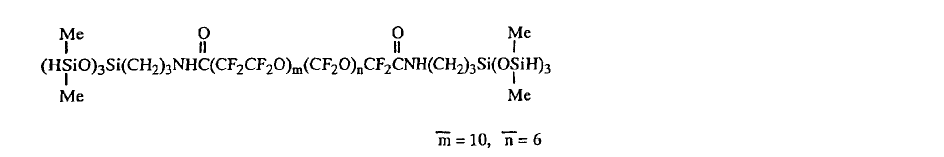

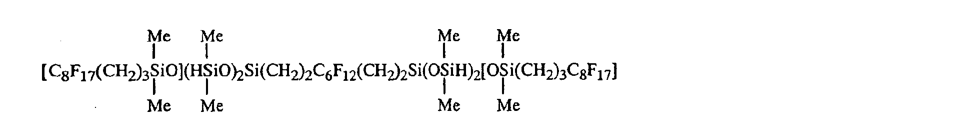

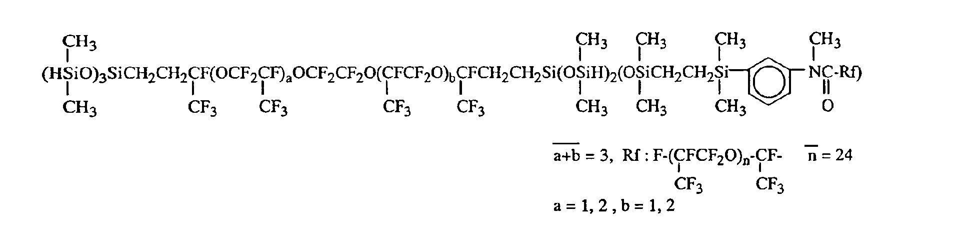

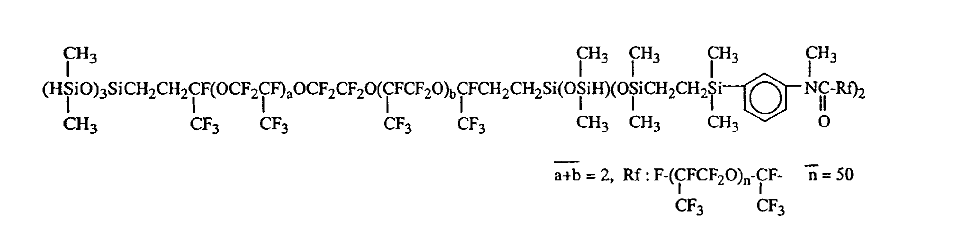

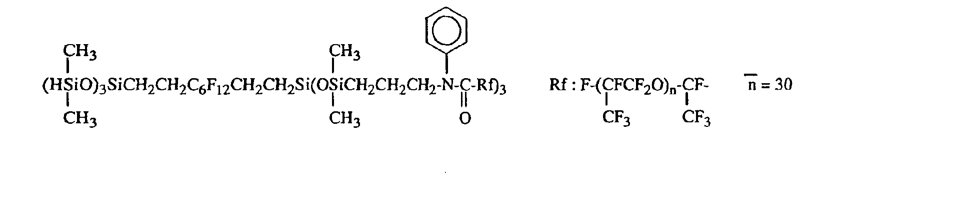

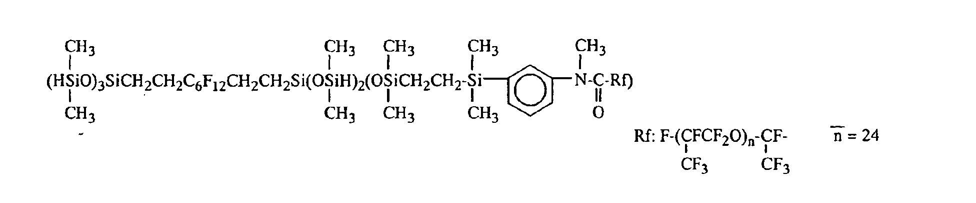

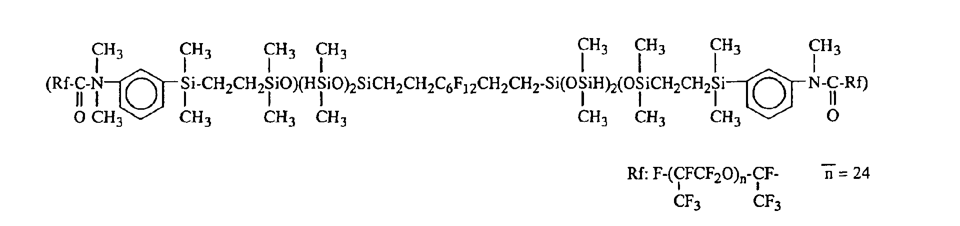

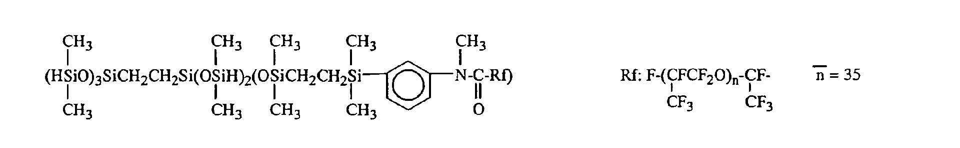

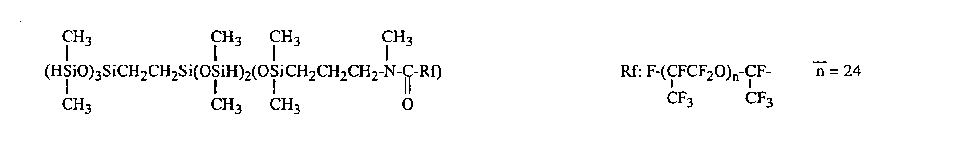

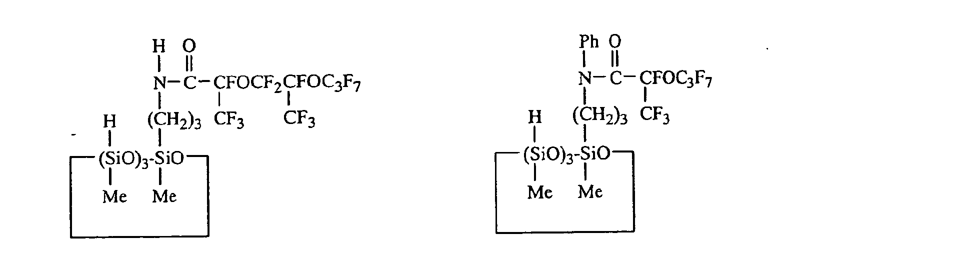

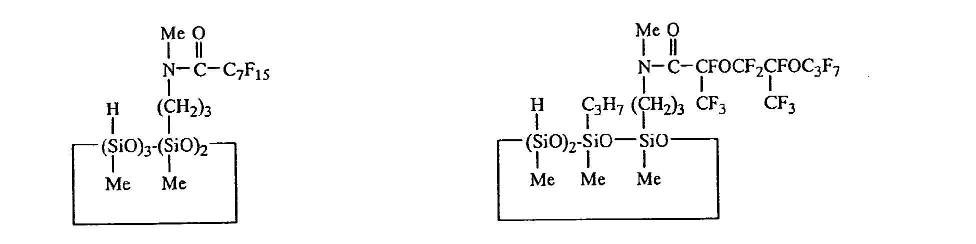

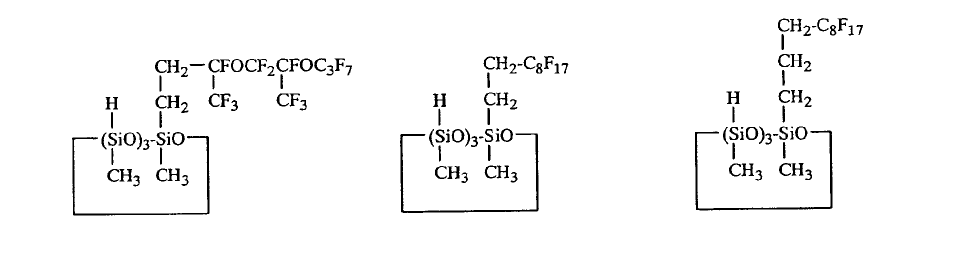

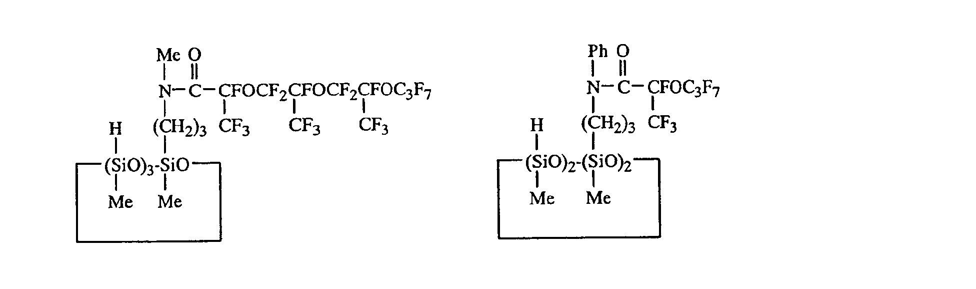

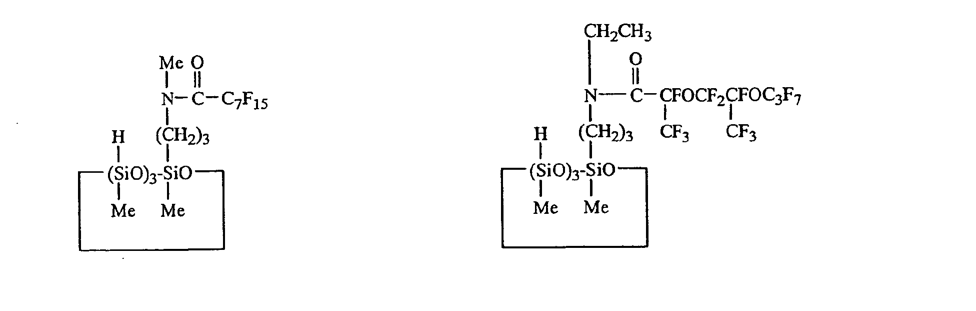

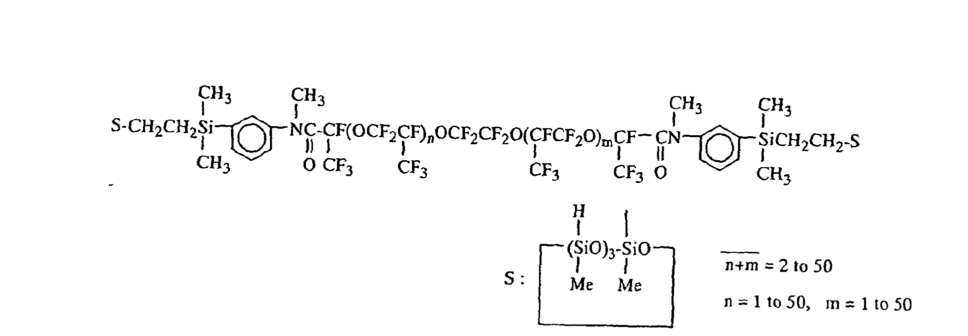

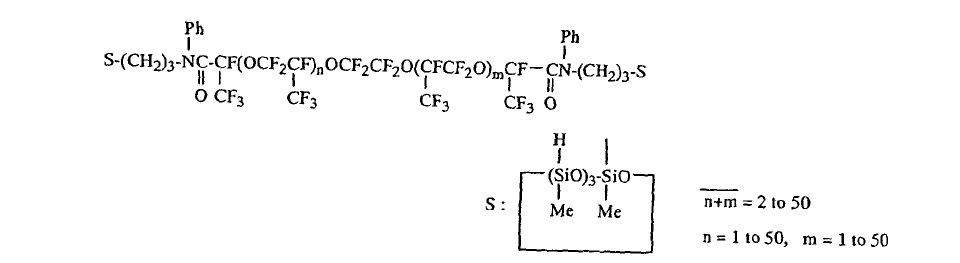

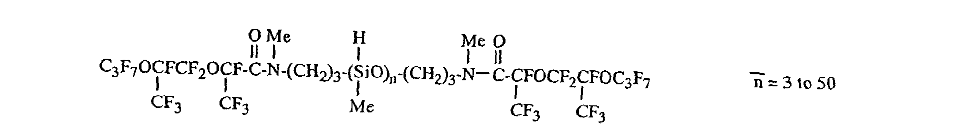

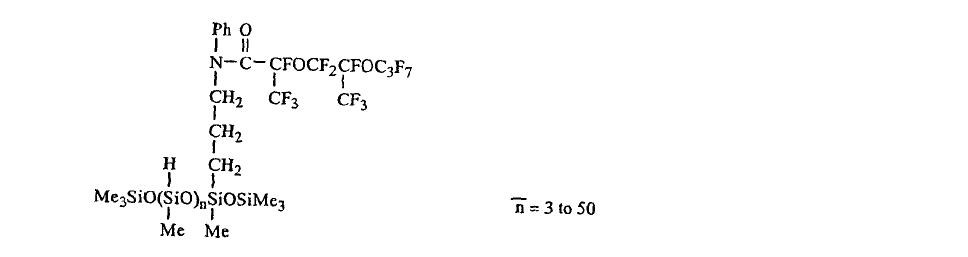

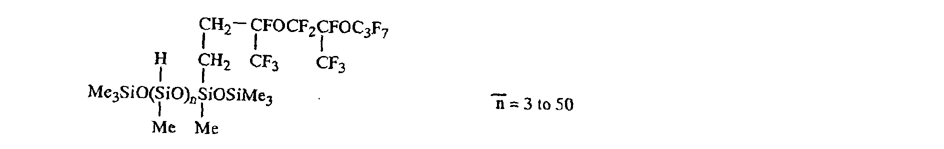

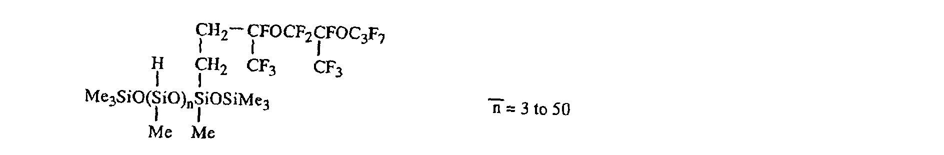

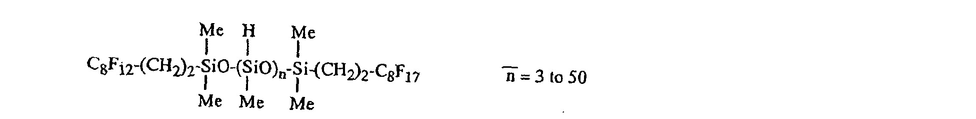

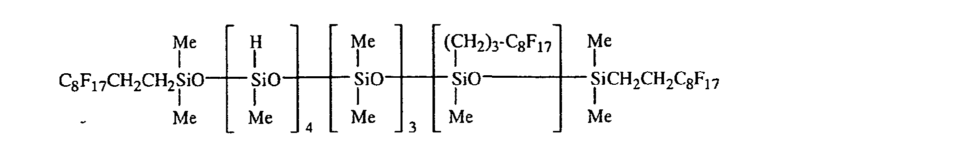

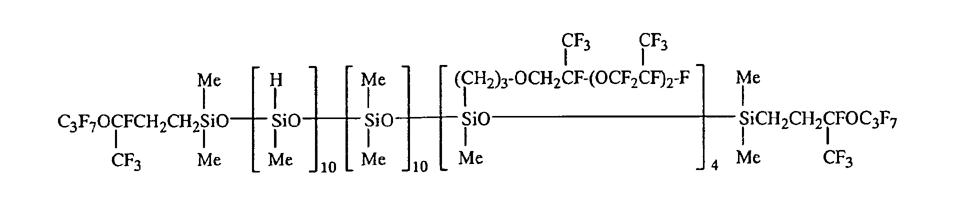

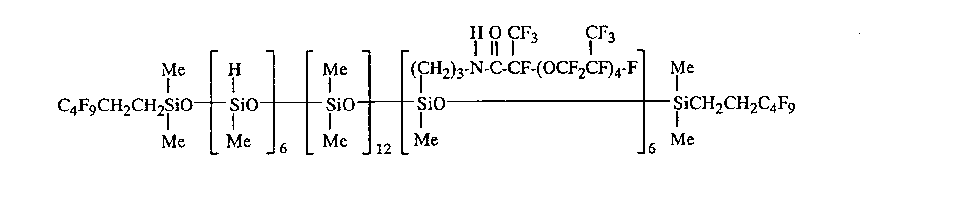

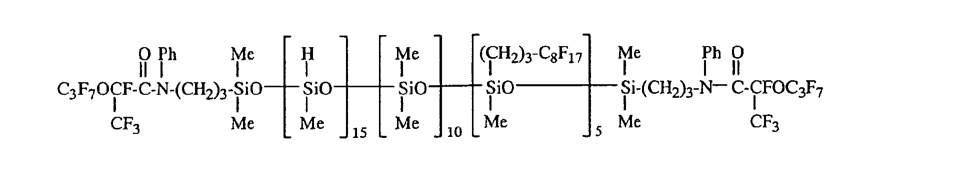

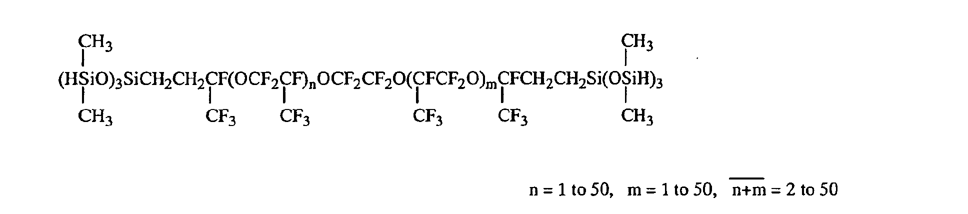

Component B is included in an amount effective for curing component A, and specifically an amount corresponding to 0.5 to 3.0 moles, and preferably 0.8 to 2.0 moles, of hydrosilyl (SiH) groups on component B per mole of alkenyl groups (e.g., vinyl, allyl, cycloalkenyl groups) on component A. If there are too few hydrosilyl groups, a sufficient degree of crosslinking will not occur, preventing a properly cured product from being achieved. On the other hand, too many hydrosilyl groups will result in foaming during the curing process.

### Component C

Component C is a reaction catalyst for hydrosilylation. The hydrosilylation catalyst promotes addition reactions between alkenyl groups in component A and hydrosilyl groups in component B. Such catalysts are generally noble metal compounds, and thus expensive. Of these, use is often made of the more readily available platinum or platinum compound catalysts.

Exemplary platinum compounds include hexachloroplatinic acid or complexes of hexachloroplatinic acid with olefins such as ethylene or with alcohols or vinyl siloxane, and metallic platinum on a support such as silica, alumina or carbon. Known platinum group metal catalysts other than platinum compounds include rhodium, ruthenium, iridium and palladium compounds, specific examples of which are RhCl(PPh₃)₃, RhCl(CO)(PPh₃)₂, Ru₃(CO)₁₂, IrCl(CO)(PPh₃)₂ and Pd(PPh₃)₄. Here, "Ph" stands for phenyl.

If these catalysts are solid catalysts, they may be used in a solid state. However, to obtain a uniform cured product, it is preferable to dissolve hexachloroplatinic acid or a complex thereof in a suitable solvent, and intimately mix the resulting solution with the linear polyfluoro compound (A).

Component C is used in a catalytic amount of 0.1 to 500 ppm, based on the of platinum group metal, per 100 parts by weight of component A.

### Component D

Component D is a hydrophobic silica powder which imparts a suitable physical strength to the cured product obtained from the inventive composition, and also functions to uniformly disperse the subsequently described isocyanurate compound (component E) and organosiloxane (component F) within the composition. This hydrophobic silica powder for component D is a finely divided silica, preferably with a BET specific surface area of at least 50 m²/g, and preferably from 50 to 400 m²/g, of the type that is familiar as a silicone rubber filler.

At low BET specific surface area e.g. less than 50 m²/g, the resulting cured product may have an insufficient physical strength, and components E and F may not uniformly disperse. On the other hand, at e.g. more than 400 m²/g, D may fail to disperse uniformly, making blending difficult to carry out. Illustrative examples of the finely divided silica include fumed silica, precipitated silica and colloidal silica. Of these, fumed silica is especially preferred.

The above finely divided silica is treated with a hydrophobizing agent, such as an organochlorosilane, an organodisilazane, a cyclic organopolysilazane or a linear organopolysiloxane. Of these, organochlorosilanes, organodisilazanes and cyclic organopolysilazanes are preferred.

Component D is included in an amount of 0.5 to 30 parts by weight, and preferably 1.0 to 25 parts by weight, per 100 parts by weight of component A. At less than 0.5 part by weight, the resulting cured product has diminished physical properties and an unstable adhesion. On the other hand, at more than 30 parts by weight, the composition has a poor flow and the resulting cured product has a lower physical strength.

### Component E

Component E is an isocyanurate which is included to impart the inventive composition with self-adhesiveness and a suitable curability, and to confer the cured product obtained from the composition with a good adhesion and good surface properties. The isocyanurate bears at least one group per molecule selected from among epoxy groups and trialkoxysilyl groups which is bonded through an intervening carbon atom to a nitrogen atom, and preferably a nitrogen atom of the isocyanurate group. Preferably it is of the formula (2) below. The definitions below of epoxy and trialkoxysilyl-bearing groups may be applicable generally for isocyanurates (E). 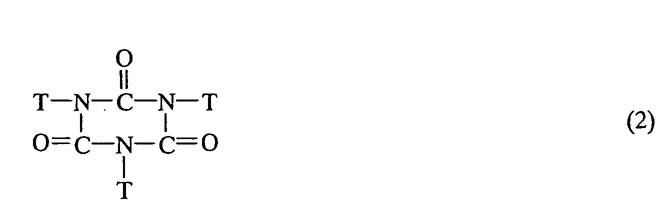 In the foregoing formula, each T is independently a lower alkyl group, an aryl group, an aralkyl group, a monofunctional lower alkenyl group, an organic group of the formula (R¹O)₃Si-R²-, R¹ being an alkyl group of 1 to 8 carbons and R² being an alkylene group of 2 to 5 carbons, or an organic group of the formula Q-R³-, Q being an epoxy group and R³ being an alkylene group of 1 to 3 carbons, with the proviso that at least one T is a (R¹O)₃Si-R²- group or a Q-R³-group.

Exemplary lower alkyl groups include linear or branched alkyls of 1 to 8 carbons, such as methyl, ethyl, propyl, isopropyl, butyl, isobutyl, pentyl, hexyl, and octyl. Exemplary aryl groups and aralkyl groups include phenyl, tolyl, xylyl and benzyl. Exemplary monofunctional lower alkenyl groups include alkenyl groups which have linear or branched chains, contain 2 to 5 carbon atoms and have one carbon-carbon double bond, such as vinyl, allyl, isopropenyl, butenyl and pentenyl. Of these, allyl is preferred.

In organic groups of the formula (R¹O)₃Si-R²-, R¹ is an alkyl group of 1 to 8 carbons. Preferred examples include methyl and ethyl. Methyl is especially preferred. R² is an alkylene group of 2 to 5 carbons, examples of which include ethylene, propylene, butylene and pentylene groups. Of these, a propylene group is preferred. Exemplary organic groups of the formula (R¹O)₃Si-R²- include trimethoxysilylethyl, trimethoxysilylpropyl, triethoxysilylethyl and triethoxysilylpropyl. Trimethoxysilylpropyl and triethoxysilylpropyl are preferred.

In organic groups of the formula Q-R³-, R³ is an alkylene group of 1 to 3 carbons, such as a methylene, ethylene or propylene group. Exemplary organic groups of the formula Q-R³- include 2,3-epoxypropyl, 3,4-epoxybutyl and 4,5-epoxypentyl. Of these, 2,3-epoxypropyl is preferred.

The isocyanurate of general formula (2) can be prepared by using a basic catalyst such as phosphine, an alkali metal alkoxide or an organotin salt to cyclize an organic isocyanate of general formula (3)

T-NCO (3)

(where T is as defined above).

However, isocyanurates bearing a group of the formula Q-R³- can be prepared only by using a peracid such as performic acid or peracetic acid to oxidize the carbon-carbon double bond on an aliphatic unsaturated isocyanurate of general formula (4) 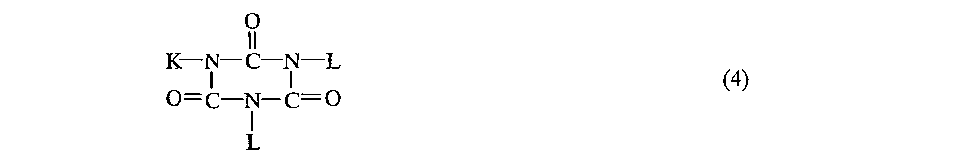 In formula (4), K is a monofunctional lower alkenyl group, and L is the same group as the K group or is a group other than the K group selected from among the groups mentioned above as examples of T groups.

Isocyanurates having (R¹O)₃Si-R²- groups can be obtained by reacting an organosilicon hydride of general formula (5)

(R¹O)₃Si-R²-H (5)

(wherein R¹ and R² are as defined above) in the presence of an aliphatic unsaturated isocyanurate of above general formula (4) and a platinum catalyst.

In the practice of the invention, when preparing this isocyanurate, the target substance may be isolated following reaction completion, although it is also possible to use the reaction mixture from which only unreacted feedstock, by-products and catalyst have been removed.

Illustrative examples of isocyanurates which may be used as component E include those having the following structural formulas, in which "Ph" stands for phenyl. These compounds may be used singly or as combinations of two or more thereof.

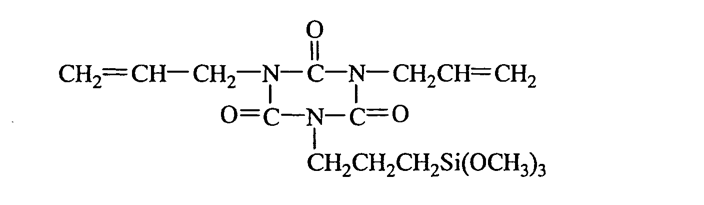

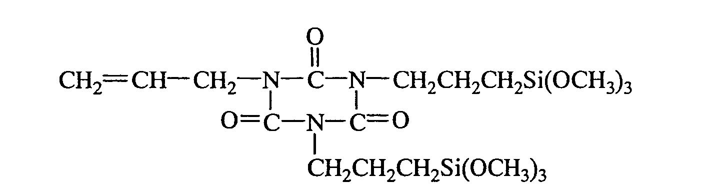

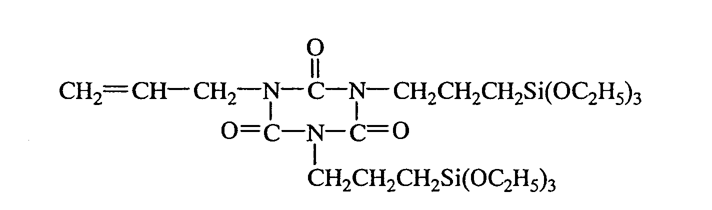

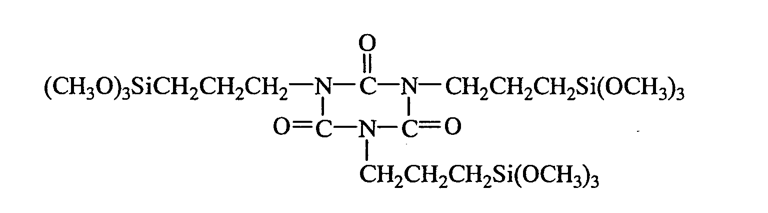

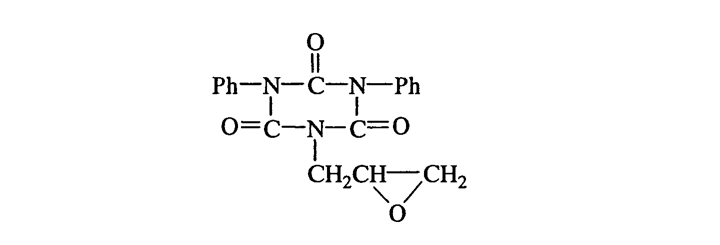

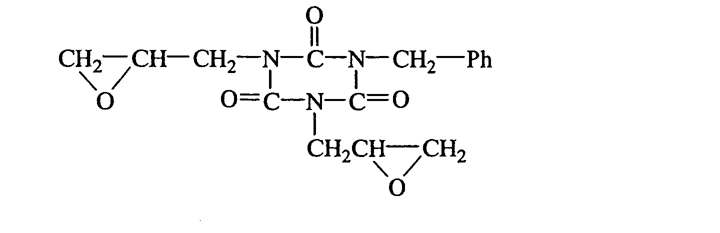

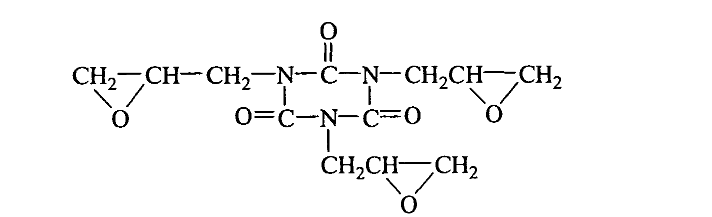

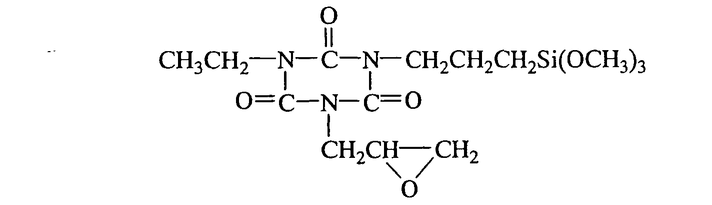

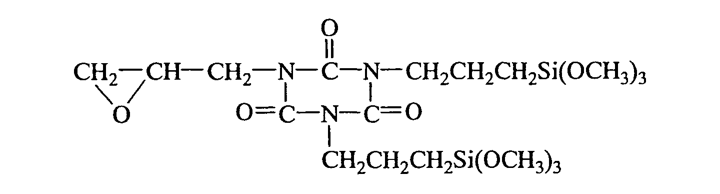

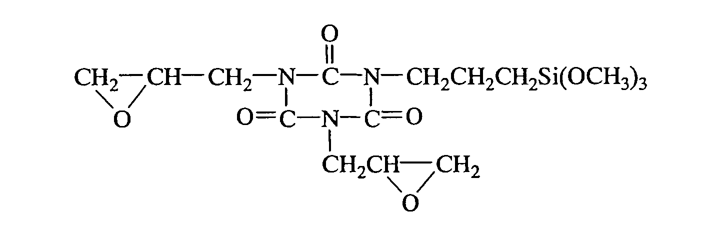

Component E is included in an amount of 0.01 to 5 parts by weight, and preferably 0.1 to 2 parts by weight, per 100 parts by weight of component A. At less than 0.01 part by weight, the composition has a poor bond strength and the cured product obtained therefrom has poor surface properties. More than 5 parts by weight hinders the curability, diminishing the physical properties of the cured product.

### Component F

Component F is an organosiloxane which is included to confer the inventive composition with sufficient self-adhesiveness. The organosiloxane bears on each molecule a silicon-bonded hydrogen atom and at least one group selected from among epoxy groups and trialkoxysilyl groups which is bonded to a silicon atom through an intervening carbon atom or through intervening carbon and oxygen atoms. Preferred organosiloxanes are those which have also at least one monovalent perfluoroalkyl group or monovalent perfluorooxyalkyl group bonded to a silicon atom through an intervening carbon atom or through intervening carbon and oxygen atoms.

This organosiloxane has a siloxane backbone which may be, for example, cyclic, linear or branched, or a combination of any of these. Organosiloxanes that may be used in the inventive composition include those having one of the following average compositional formulas. 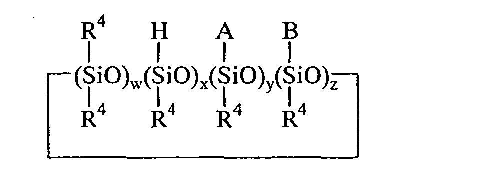 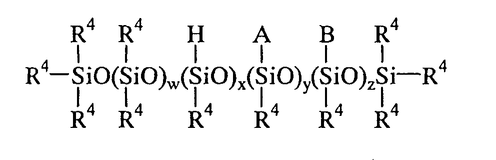 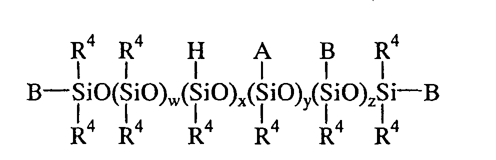 In these formulas, R⁴ is a halogen-substituted or unsubstituted monovalent hydrocarbon group, A and B are as described below, the letter w is from 0 to 100, the letter x is from 1 to 100, the letter y is from 1 to 100, and the letter z is from 0 to 100.

R⁴ are halogen-substituted or unsubstituted monovalent hydrocarbon groups of 1 to 10 carbons, and preferably 1 to 8 carbons. Specific examples include alkyl groups such as methyl, ethyl, propyl, butyl, hexyl, cyclohexyl and octyl; aryl groups such as phenyl and tolyl; aralkyl groups such as benzyl and phenylethyl; and any of these monovalent hydrocarbon groups in which some or all of the hydrogen atoms are substituted with fluorine or other halogen atoms. Of these, methyl is especially preferred.

It is preferable for the letter w to be from 0 to 20, for the letter x to be from 1 to 20, for the letter y to be from 1 to 20, for the letter z to be from 1 to 20, and for the sum w+x+y+z to be from 3 to 50.

The letter A in the above formulas represents an epoxy group and/or trialkoxysilyl group which is bonded to a silicon atom through an intervening carbon atom or through intervening carbon and oxygen atoms. Specific examples include the following groups. 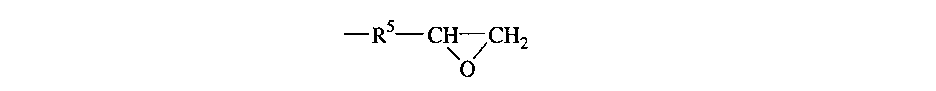 Here, R⁵ is a divalent hydrocarbon group with 1 to 10 carbons, and preferably 1 to 5 carbons, which may have an intervening oxygen atom, such as an alkylene or cycloalkylene group.

-R⁶-Si(OR⁷)₃

Here, R⁶ is a divalent hydrocarbon group (e.g., an alkylene group) with 1 to 10 carbons, and preferably 1 to 4 carbons. R⁷ is a monovalent hydrocarbon group (e.g., an alkyl group) with 1 to 8 carbons, and preferably 1 to 4 carbons. 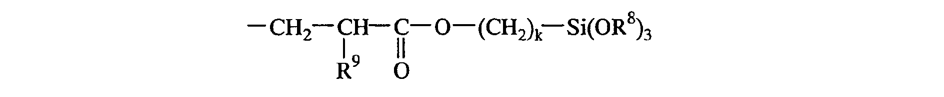 Here, R⁸ is a monovalent hydrocarbon group (e.g., an alkyl group) with 1 to 8 carbons, and preferably 1 to 4 carbons. R⁹ is a hydrogen atom or a methyl group, and the letter k is an integer from 2 to 10.

The letter B in the above formulas represents a monovalent perfluoroalkyl group or perfluorooxyalkyl group which is bonded to a silicon atom through a carbon atom or through carbon and oxygen atoms. Examples of the monovalent perfluoroalkyl group or perfluorooxyalkyl group include those of the general formulas

CₛF₂ₛ₊₁-

(wherein s is as defined above) and

F-[CF(CF₃)CF₂O]_{n'}-CₜF₂ₜ-

(wherein n' is 2 to 200, preferably 2 to 100 and t is as defined above).

These organosiloxanes can be prepared by using a conventional method to carry out a partial addition reaction on an organohydrogenpolysiloxane bearing at least three silicon-bonded hydrogen atoms (SiH groups) per molecule with a compound bearing an aliphatic unsaturated group such as vinyl or allyl and an epoxy group and/or trialkoxysilyl group and also with, if necessary, a compound having an aliphatic unsaturated group and a perfluoroalkyl group or a perfluorooxyalkyl group. The number of aliphatic unsaturated groups must be smaller than the number of SiH groups.

These definition options A, B for epoxy/trialkoxysilyl/perfluoro(oxy)alkyl groups may be applied for organosiloxanes (F) other than those of the specified formulae.

In the practice of the invention, when preparing this organosiloxane, the target substance may be isolated following reaction completion, although it is also possible to use the reaction mixture from which only unreacted feedstock and the addition reaction catalyst have been removed.

Specific examples of organosiloxanes which may be used as component F include those having the following structural formulas, in which "Me" stands for methyl. These compounds may be used singly or as combinations of two or more thereof. 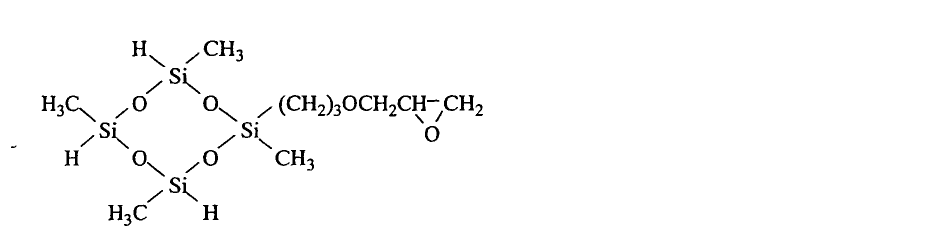 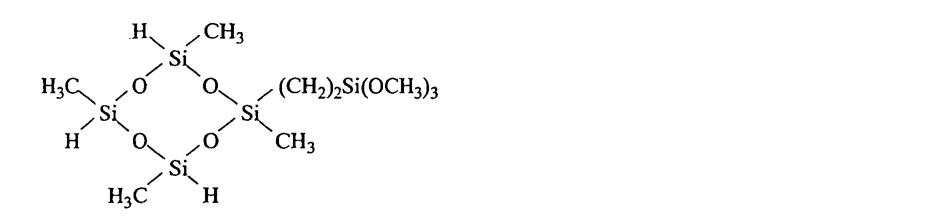 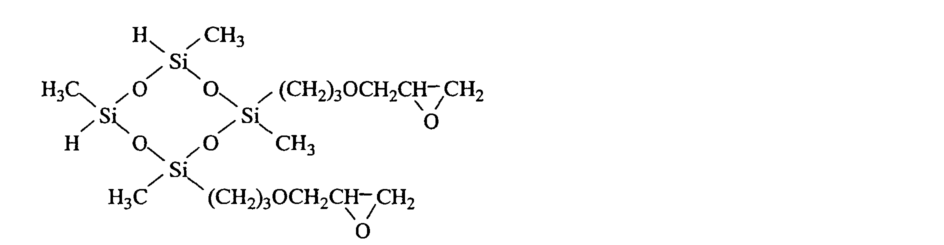 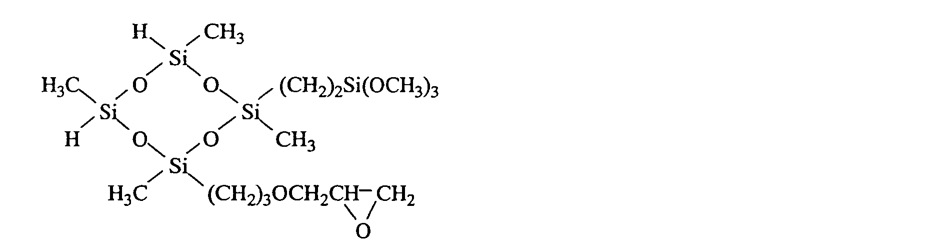 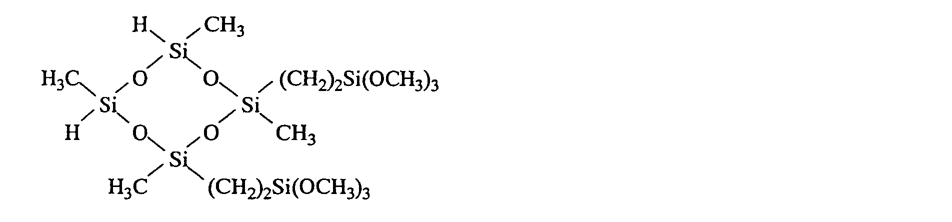 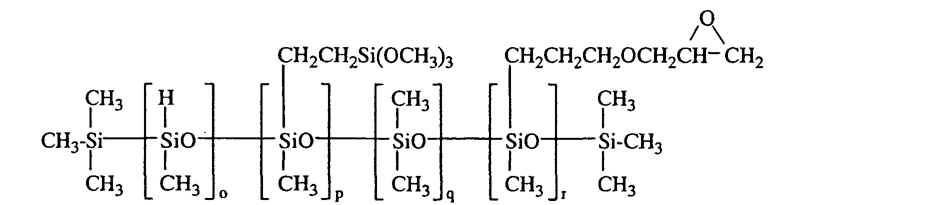 (the letters o, q and r represent positive integers; and the letter p is 0 or a positive integer) 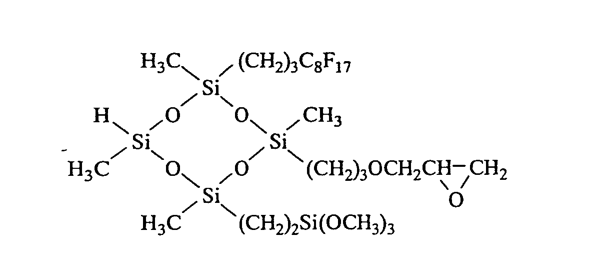 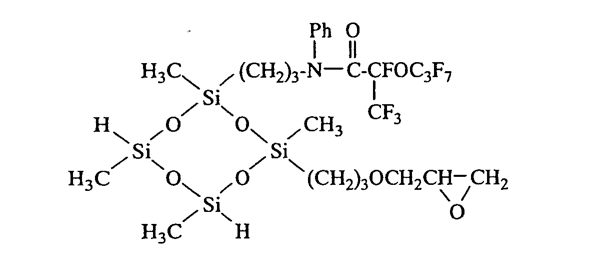 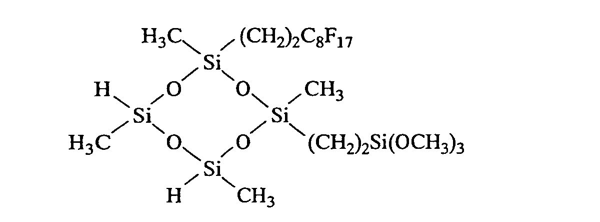 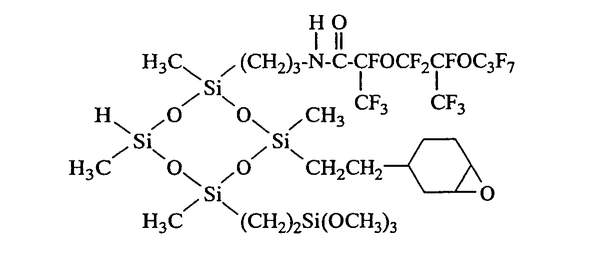 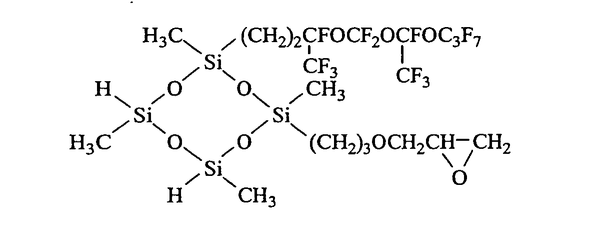 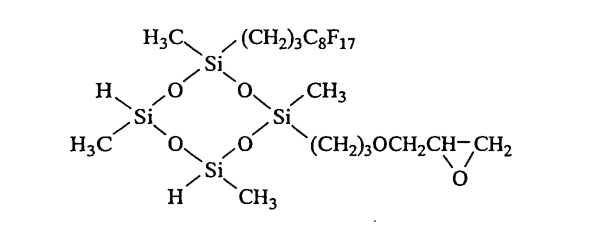 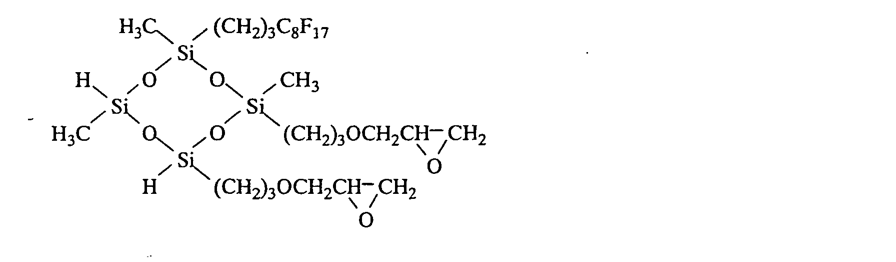 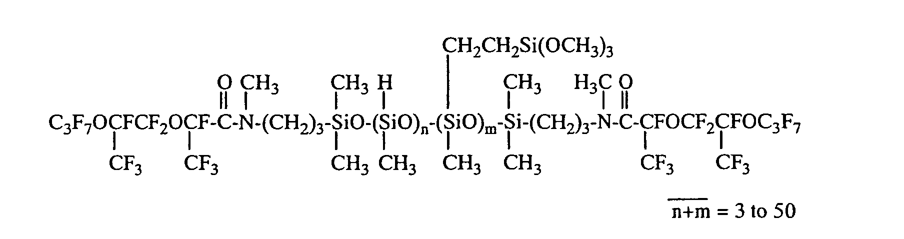 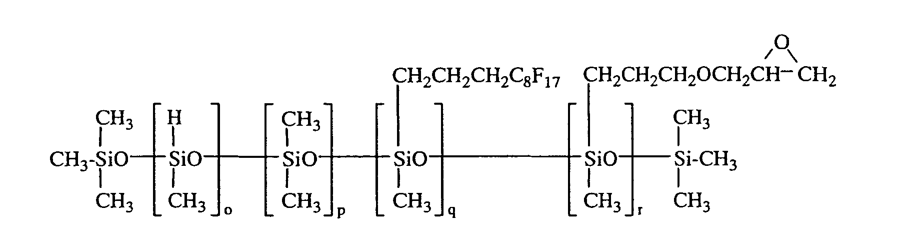 (the letters o, q and r represent positive integers; and the letter p is 0 or a positive integer)

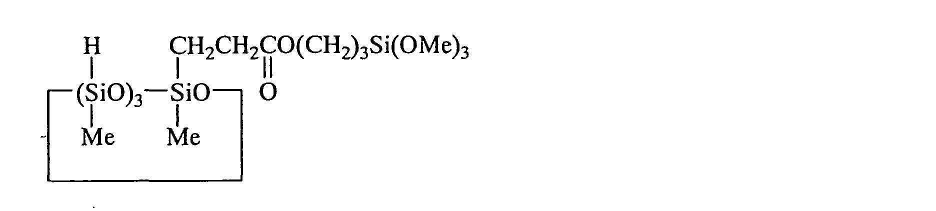

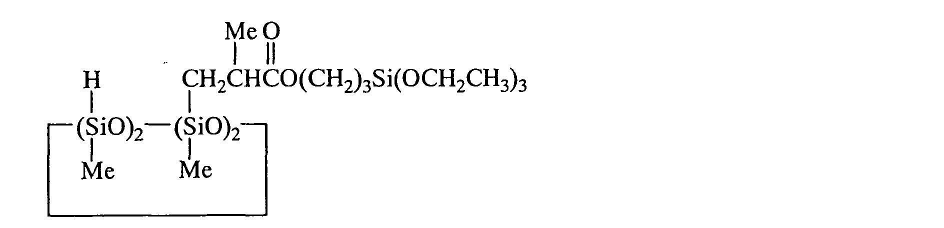

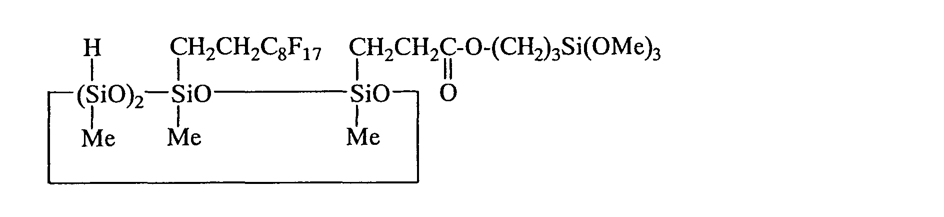

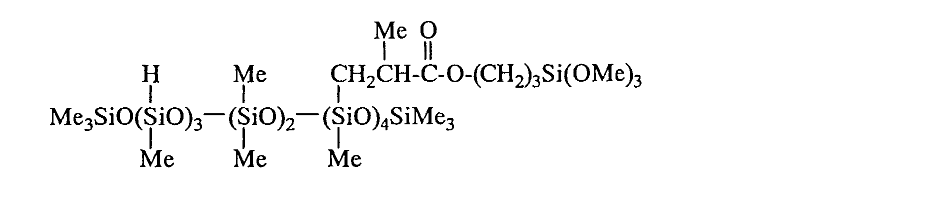

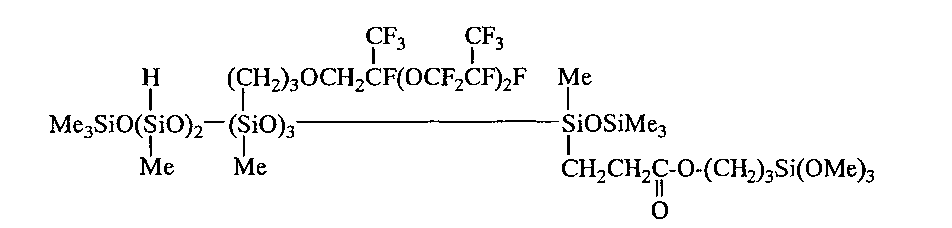

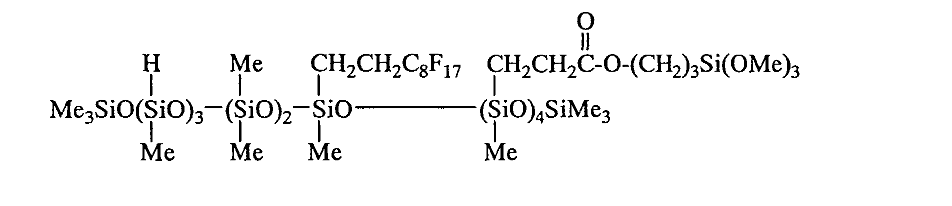

Component F is included in an amount of 0.1 to 10 parts by weight, and preferably 0.2 to 5 parts by weight, per 100 parts by weight of component A. At less than 0.1 part by weight, sufficient adhesion cannot be achieved. On the other hand, at more than 10 parts by weight, the composition has a poor flow and less than desirable curability, and the resulting cured product has a diminished physical strength.

### Other Components

In addition to above components A to F, optional ingredients that may also be included in the inventive composition to increase its utility include plasticizers, viscosity modifiers, flexibilizers, hydrosilylation catalyst regulators, inorganic fillers, adhesion promoters, tackifiers other than component F and silane coupling agents. These additives may be included in any respective amounts that allow the objects of the invention to be attained and that do not compromise the properties of the composition or the cured product obtained therefrom.

Polyfluoromonoalkenyl compounds of general formula (6) below and/or linear polyfluoro compounds of general formulas (7) and (8) below may be used as plasticizers, viscosity modifiers and flexibilizers.

Rf²-(X')ₐCH=CH₂ (6)

In formula (6), the letters X' and a are as defined above, and Rf² has general formula (iii) below: 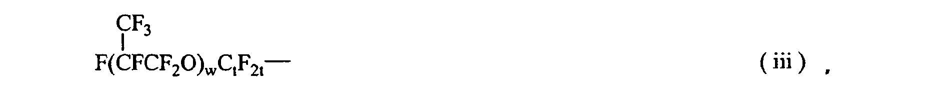 wherein the letter w is a positive integer larger than 0 and the letter t is as defined above but smaller than the sum of p+q (average) plus r and smaller than the sum u+v for the Rf¹ group in above component A.

D-O-(CF₂CF₂CF₂O)_{c}-D (7)

In formula (7), D is a group of the formula CₛF₂ₛ₊₁-, s being 1 to 3, and the letter c is an integer which is from 1 to 200, but smaller than the sum of p+q (average) plus r and smaller than the sum u+v for the Rf¹ group in above component A.

D-O-(CF₂O)_{d}(CF₂CF₂O)ₑ-D (8)

In formula (8), D is the same as indicated above, and the letters d and e are each integers of 1 to 200 such that the sum d+e is no larger than the sum of p+q (average) plus r or the sum u+v for the Rf¹ group in above component A.

Specific examples of polyfluoromonoalkenyl compounds of above general formula (6) include the following, wherein the letter m satisfies the above-indicated condition.

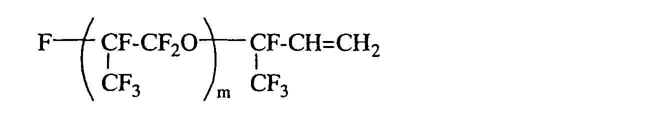

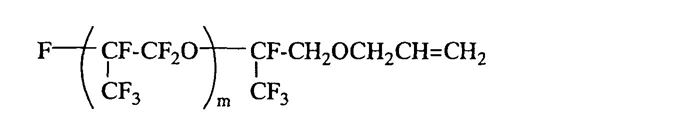

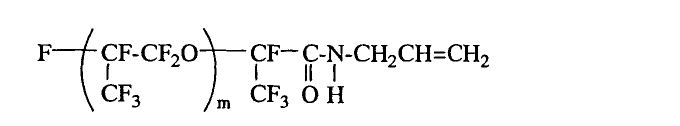

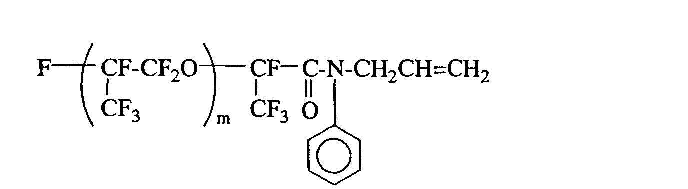

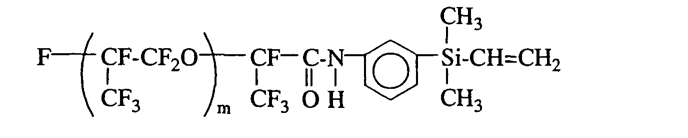

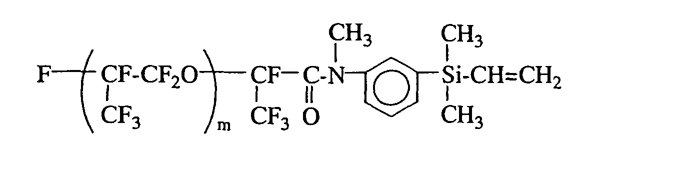

Specific examples of linear polyfluoro compounds of above general formulas (7) and (8) include the following, wherein the letter n and the sum n+m satisfy the above-indicated conditions.

CF₃O-(CF₂CF₂CF₂O)ₙ-CF₂CF₃

CF₃-[(OCF₂CF₂)ₙ(OCF₂)ₘ]-O-CF₃

In these formulas, the letters m and n are each from 1 to 200, and the sum m+n is from 1 to 200.

Polyfluoro compounds of above formulas (6) to (8) may be included in the inventive composition in an amount of 1 to 300 parts by weight, and preferably 50 to 250 parts by weight, per 100 parts by weight of the polyfluorodialkenyl compound of above formula (1). As with the polyfluorodialkenyl compound, it is desirable for these polyfluoro compounds of formulas (6) to (8) to have a viscosity at 23°C within a range of 5 to 100,000 mPa·s.

Illustrative examples of suitable hydrosilylation catalyst regulators include acetylenic alcohols such as 1-ethynyl-1-hydroxycyclohexane, 3-methyl-1-butyn-3-ol, 3,5-dimethyl-1-hexyn-3-ol, 3-methyl-1-penten-3-ol and phenylbutynol; the reaction products of chlorosilanes having monovalent fluorine-bearing substituents with acetylenic alcohols; 3-methyl-3-penten-1-yne, 3,5-dimethyl-3-hexen-1-yne and triallyl isocyanurate; polyvinylsiloxane, and organophosphorus compounds. The addition of these compounds helps to achieve a suitable curing reactivity and shelf stability.

Illustrative examples of inorganic fillers include reinforcing or semi-reinforcing fillers such as quartz powder, fused silica powder, diatomaceous earth and calcium carbonate; inorganic pigments such as titanium oxide, iron oxide, carbon black and cobalt aluminate; heat stabilizers such as titanium oxide, iron oxide, carbon black, cerium oxide, cerium hydroxide, zinc carbonate, magnesium carbonate and manganese carbonate; substances that confer thermal conductivity, such as alumina, boron nitride, silicon carbide and metal powders; and substances that confer electrical conductivity, such as carbon black, silver powder and conductive zinc oxide.

Adhesion promoters such as carboxylic anhydrides and titanic acid esters, tackifiers other than component F and/or silane coupling agents may also be added to the inventive composition.

### Adhesive Composition

The adhesive composition of the invention can be prepared by uniformly mixing above components A to F and other, optional, ingredients using a suitable mixing apparatus, such as a planetary mixer, Ross mixer or Hobart mixer, and using also, if necessary, an apparatus for intimately working the mixture, such as a kneader or a three-roll mill.

No particular limitation is imposed on the method for preparing the curable compositions of the invention. For example, preparation may involve blending all of the components together. Alternatively, the components may be prepared as two separate compositions, which are then mixed at the time of use.

In preparing a perfluoropolyether adhesive composition containing the above components according to the invention, the adhesive properties of the composition can be enhanced by first blending 20 to 60 parts by weight of component D with 100 parts by weight of component A, then kneading the blend under heat and reduced pressure or under heat and applied pressure, and subsequently diluting the kneaded material with component A to the required proportions.

Components A and D are blended and kneaded together in order to lower the viscosity of the adhesive composition and improve its adhesive properties. The viscosity decreases because the linear polyfluoro compound (A) fully covers the surface of the hydrophobic silica powder (D), discouraging the adsorption of components B, E and F onto the silica surface. Such blending and working together can be carried out with a suitable apparatus such as a planetary mixer, gate mixer or kneader.

The blending ratio of components A and D will vary depending on the type of hydrophobic silica powder used as component D, but is generally in a range of 25 to 60 parts by weight of component D per 100 parts by weight of component A. At less than 25 parts by weight, it is difficult to lower the viscosity of the final blended composition and a very high viscosity may result. On the other hand, at more than 60 parts by weight, excessive heat generation tends to occur during kneading, lowering the mechanical properties of the composition. Moreover, mixture in a dry-blending machine becomes difficult.

Blending and kneading are not subject to any particular limitation with respect to temperature and time. However, to stabilize the mechanical characteristics and other physical properties of the adhesive composition, it is preferable for the heat treatment temperature to be 120 to 180°C. For uniform kneading, it is preferable that blending and kneading be carried out for at least one hour.

The pressure used during blending and kneading varies depending on the apparatus used, although it is essential to carry the operation out under either applied pressure or a reduced pressure according to the particular apparatus. For example, intimate mixture in a planetary mixer or a gate mixer is preferably carried out at a reduced pressure, and preferably a gauge pressure of -0.05 MPa or less. Mixture in a kneader is preferably carried out at a gauge pressure of 0.4 to 0.6 MPa. The operation is carried out under these conditions to facilitate wetting (coating) of the surface of component D by component A.

A perfluoropolyether adhesive composition can obtained by blending above components B, C, E and F into the resulting liquid base consisting of components A and D.

Depending on the functional groups on the linear polyfluoro compound (A) and the type of catalyst (C), it may be possible to cure the resulting adhesive composition at room temperature. However, heating is desirable to promote curing. In particular, to achieve good adhesion to various types of substrates, it is preferable for curing to be carried out at a temperature of at least 60°C, and preferably 100 to 200°C, for a period of from several minutes to several hours.

When using the adhesive compositions of the invention, depending on the particular application and purpose of use, it may be desirable to use the composition after first dissolving it to the desired concentration in a suitable fluorocarbon solvent, such as 1,3-bis(trifluoromethyl)benzene, Fluorinate (available from 3M Corporation), perfluorobutyl methyl ether or perfluorobutyl ethyl ether. The use of a solvent is especially preferred in thin-film coating applications.

The adhesive compositions of the invention are useful as adhesives for automotive-related components and for various types of electrical and electronic components. For example, these adhesive compositions are highly suitable as adhesive sealants and protective coatings for detectors and sensors, such as various types of pressure sensors used in automotive control systems, gas concentration detectors, and temperature sensors. The inventive compositions also lend themselves well to use as protective sealants for sensors exposed to various gases, hot water and chemicals, as adhesives for ink jet printers, as adhesives and sealants for printer heads, as coatings for rolls and belts in laser printers and copiers, and as adhesive sealants and coatings for various types of circuit substrates.

The adhesive compositions of the invention have excellent solvent resistance, chemical resistance, heat resistance and low temperature properties, low moisture transmission, and excellent electrical characteristics. When heated at a relatively low temperature for a relatively short period of time, they are able to provide cured products having a good adhesion to a wide variety of substrates, including metals and plastics. Because they provide a cured coat having a smooth surface and a uniform thickness, they lend themselves especially well to use in protective coating applications for electrical and electronic components that require long-term protection.

### EXAMPLES

The following examples of the invention and comparative examples, wherein all parts are by weight, are provided by way of illustration and not by way of limitation. Properties such as viscosity and bond strength are indicated as values measured at 23°C in accordance with JIS K6249.

### Example 1

One hundred parts of the polymer of formula (9) below (viscosity, 10,000 mPa·s; number-average molecular weight, 17,000; vinyl group content, 0.012 mol/100 g) was placed in a planetary mixer, 25 parts of fumed silica that had been surface treated with dimethyldichlorosilane (BET specific surface area, 110 m²/g) was added, and these ingredients were worked together for one hour without heating. The mixer was then heated while the ingredients continued to be worked. After the internal temperature reached 150°C, heat treatment was carried out for two hours under a reduced pressure (60 torr) while holding the temperature at 150 to 170°C. The mixer contents were then cooled to 40°C or less, following which the blended material was passed twice through a three-roll mill, yielding the base compound.

The planetary mixer was subsequently charged with 68 parts of the polymer of formula (9) below per 40 parts of the base compound, and the polymer was mixed to uniformity with the base compound. Next, 0.40 part of a toluene solution of a platinum-divinyltetramethyldisiloxane complex (platinum concentration, 0.5 wt%), 0.30 part of a 50% toluene solution of ethynyl cyclohexanol, 0.2 part of isocyanurate of formula (10) below, 1.6 parts of the fluorine-bearing organohydrogensiloxane of formula (11) below (SiH group content, 0.00387 mol/g), 1.1 parts of the fluorine-containing organohydrogensiloxane of formula (12) below (SiH group content, 0.00779 mol/g) and 1.2 parts of the tackifier of formula (13) below were successively added, and the contents of the mixer were mixed to uniformity. The mixture was then deaerated, yielding the final composition.

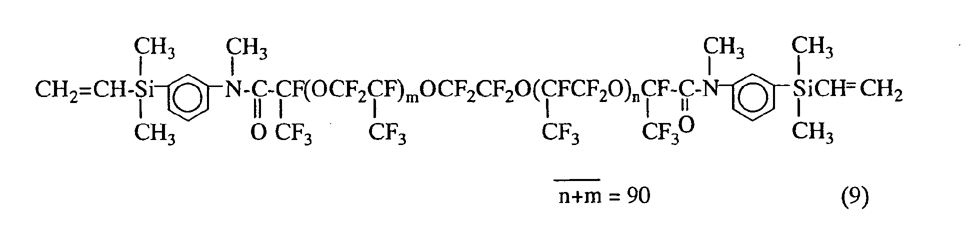

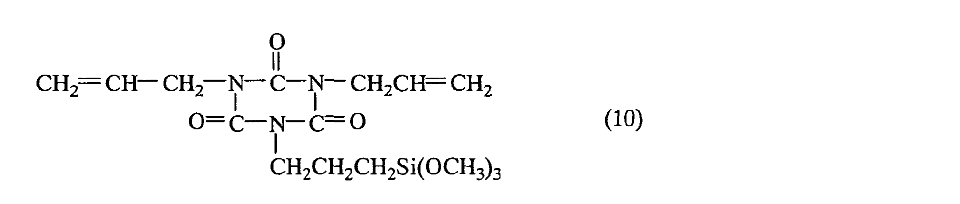

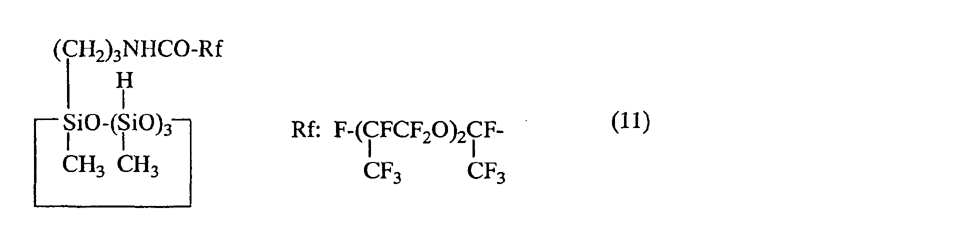

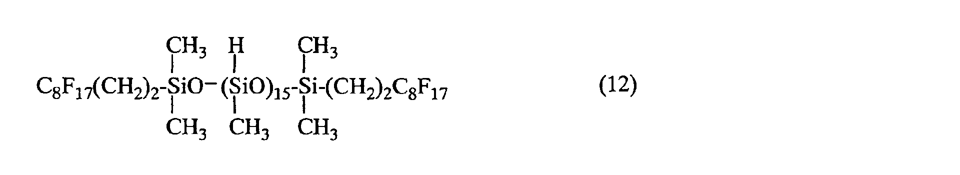

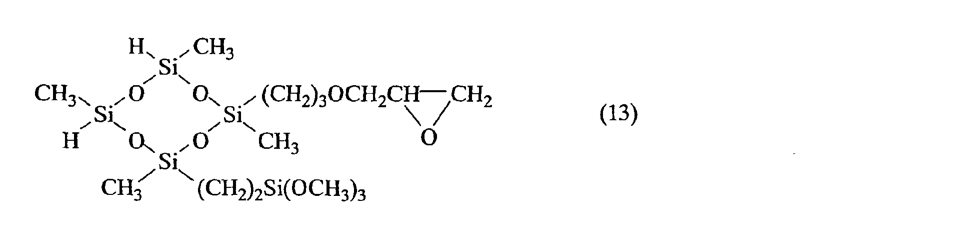

The resulting composition was filled into a cartridge, then extruded onto a Teflon (registered trademark of the DuPont Company) plate (50×50×2 mm) and coated thereon with a bar coater to a composition layer thickness of 250 µm. The composition was cured by heating the coated Teflon plate in a drying oven at 150°C for 1 hour. The surface of the cured film was level and free of visible creases ridges and other defects. The cured film was peeled from the Teflon plate, and the thickness at four points on the edges and at the center was measured with a film thickness gauge. All the measurements indicated a constant value within the range of error. Results obtained from visual observation of the surface of the cured film and from film thickness measurements are given in Table 1.

Next, adhesion test specimens were prepared by sandwiching a 1 mm thick layer of the composition obtained above between 100x25 mm test panels of the various types of adherends shown in Table 2 arranged with an overlap between their respective edges of 10 mm, and heating at 150°C for 1 hour to cure the composition. These specimens were then subjected to tensile-shear strength tests (test rate, 50 mm/min), and the bond strength and cohesive failure rate were evaluated. The results are shown in Table 2.

### Example 2

Aside from using 0.3 part of the isocyanurate of formula (14) below instead of the isocyanurate of formula (10) and using 2.0 part of the tackifier of formula (15) below instead of the tackifier of formula (13), a composition was prepared by the same method as in Example 1. Evaluations were carried out in the same way as in Example 1. The results are shown in Tables 1 and 2.

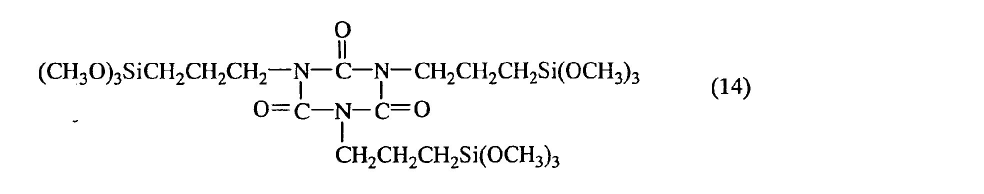

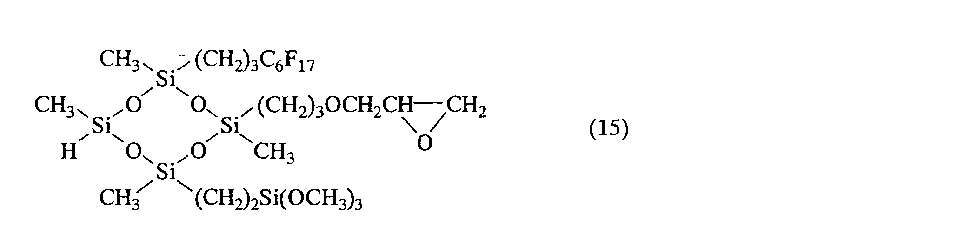

### Example 3

Aside from using 0.15 part of the isocyanurate of formula (16) below instead of the isocyanurate of formula (10) in Example 1, and using 1.5 parts of the tackifier of formula (17) below instead of the tackifier of formula (13), a composition was prepared by the same method as in Example 1. Evaluations were carried out in the same way as in Example 1. The results are shown in Tables 1 and 2.

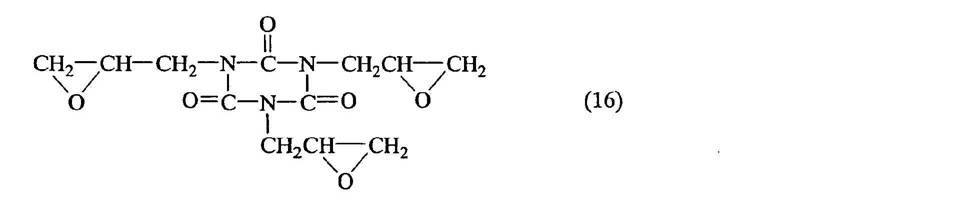

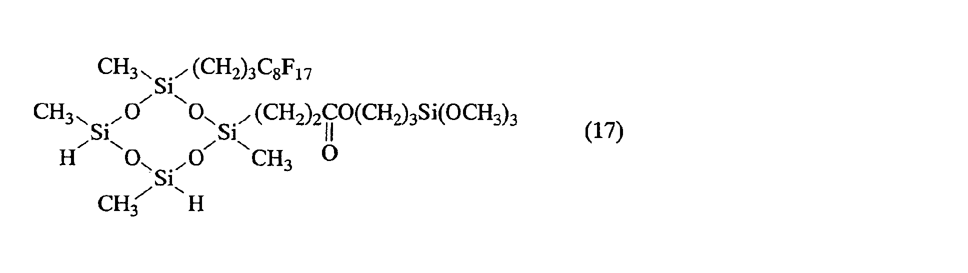

### Comparative Example 1

Aside from not using the isocyanurate of formula (10) above, a composition was prepared by the same method as in Example 1. Evaluations were carried out as in Example 1. The results are shown in Tables 1 and 2.

### Comparative Example 2

Aside from not using the isocyanurate of formula (14) above, a composition was prepared by the same method as in Example 2. Evaluations were carried out as in Example 1. The results are shown in Tables 1 and 2.

### Comparative Example 3

Aside from not using the isocyanurate of formula (16) above, a composition was prepared by the same method as in Example 3. Evaluations were carried out as in Example 1. The results are shown in Tables 1 and 2.

**Table 1**

| | | Example | | | Comparative Example | | |
|---|---|---|---|---|---|---|---|
| | | 1 | 2 | 3 | 1 | 2 | 3 |
| Surface defects | Creases | none | none | none | yes | yes | yes |
| | Ridges | none | none | none | yes | yes | yes |
| Film thickness (µm) | Center | 240 | 238 | 237 | not measurable | not measurable | not measurable |
| | Edge 1 | 235 | 229 | 229 | not measurable | not measurable | not measurable |
| | Edge 2 | 232 | 230 | 234 | not measurable | not measurable | not measurable |
| | Edge 3 | 230 | 234 | 231 | not measurable | not measurable | not measurable |
| | Edge 4 | 238 | 236 | 236 | not measurable | not measurable | not measurable |

**Table 2**

| Shear strength (MPa) | Example | | | Comparative Example | | |
|---|---|---|---|---|---|---|
| | 1 | 2 | 3 | 1 | 2 | 3 |
| Aluminum | 2.0(100) | 2.5(100) | 2.3(100) | 1.8(100) | 2.2(100) | 2.1(100) |
| Stainless steel | 1.6(100) | 2.0(100) | 1.8(100) | 1.4(100) | 1.8(100) | 1.6(100) |
| Nickel | 1.3(100) | 1.6(100) | 1.5(100) | 0.8( 70) | 1.3( 90) | 1.4(100) |
| Epoxy resin | 1.3(100) | 1.5(100) | 1.5(100) | 1.1( 90) | 1.4(100) | 1.3(100) |
| PET resin | 1.4(100) | 1.7(100) | 1.6(100) | 1.0( 80) | 1.4( 90) | 1.3( 90) |
| PBT resin | 1.5(100) | 1.8(100) | 1.7(100) | 1.1( 80) | 1.5( 90) | 1.4( 90) |
| Values in parenthesis ( ) indicate cohesive failure rate in percent of surface area. | | | | | | |

## Claims

1. An adhesive composition comprising:
(A) 100 parts by weight of linear polyfluoro compound having at least two alkenyl groups per molecule and a main chain that includes a perfluoropolyether structure;
(B) fluorine-bearing organohydrogensiloxane having at least two silicon-bonded hydrogen atoms (SiH groups) per molecule, in an amount corresponding to 0.5 to 3.0 moles of SiH groups per mole of the alkenyl groups on component A;
(C) a platinum group catalyst in an amount of from 0.1 to 500 ppm, based on platinum group metal;
(D) 0.5 to 30 parts by weight of hydrophobic silica powder;
(E) 0.01 to 5 parts by weight of isocyanurate bearing at least one group per molecule selected from epoxy groups and trialkoxysilyl groups and bonded through an intervening carbon atom to a nitrogen atom; and
(F) 0.1 to 10 parts by weight of organosiloxane bearing on each molecule a silicon-bonded hydrogen atom and at least one group selected from epoxy groups and trialkoxysilyl groups and bonded to a silicon atom through an intervening carbon atom, or through intervening carbon and oxygen atoms.

2. An adhesive composition of claim 1 in which component A is a linear polyfluoro compound of general formula (1)
CH₂=CH-(X)ₐ-Rf¹-(X')ₐ-CH=CH₂ (1),
wherein:
X is -CH₂-, -CH₂O-, -CH₂OCH₂- or -Y-NR-CO-, Y being -CH₂- or an o-, m- or p-dimethylsilylphenylene group of structural formula (Z) 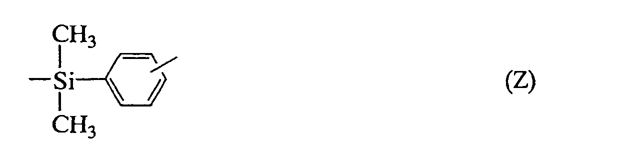 and R being hydrogen or a substituted or unsubstituted monovalent hydrocarbon group;
X' is -CH₂-, -OCH₂-, -CH₂OCH₂- or -CO-NR¹-Y'-, Y' being -CH₂- or an o-, m- or p-dimethylsilylphenylene group of structural formula (Z') 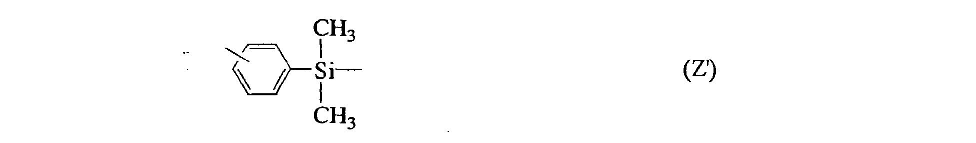 and R being as defined above;
Rf¹ is a divalent perfluoropolyether group of general formula (i) 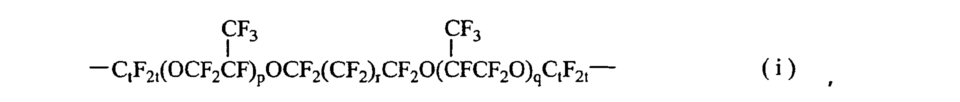 the letters p and q being integers from 1 to 150 such that the average of the sum p+q is from 2 to 200, the letter r being an integer from 0 to 6 and the letter t being 2 or 3, or a divalent perfluoropolyether group of general formula (ii) 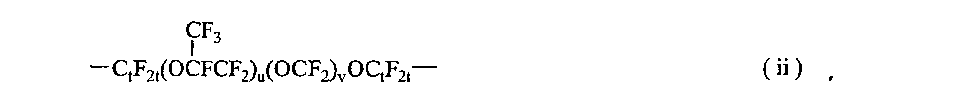 the letter u being an integer from 1 to 200, the letter v being an integer from 1 to 50 and the letter t being as defined above; and
each occurrence of the letter a is independently 0 or 1.

3. An adhesive composition of claim 1 or 2, wherein the fluorine-bearing organohydrogensiloxane (B) has on the molecule at least one group selected from among monovalent perfluoroalkyl groups, monovalent perfluorooxyalkyl groups, divalent perfluoroalkylene groups and divalent perfluorooxyalkylene groups.

4. An adhesive composition of any one of claims 1 to 3, wherein the isocyanurate (E) has general formula (2) 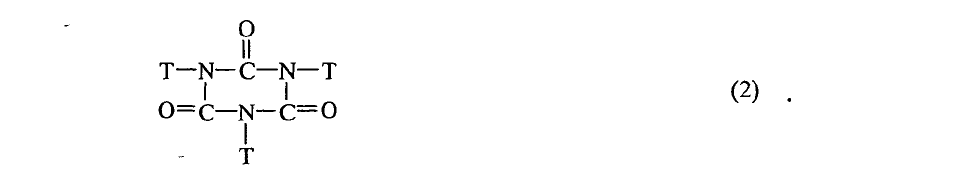 wherein each T is independently a lower alkyl group, an aryl group, an aralkyl group, a monofunctional lower alkenyl group, an organic group of the formula (R¹O)₃Si-R²-, R¹ being a lower alkyl group and R² being a lower alkylene group, or an organic group of the formula Q-R³-, Q being an epoxy group and R³ being a lower alkylene group, with the proviso that at least one T is a (R¹O)₃Si-R²- group or a Q-R³- group.

5. An adhesive composition of any one of claims 1 to 4, wherein the organosiloxane (F) also includes at least one monovalent perfluoroalkyl group or monovalent perfluorooxyalkyl group bonded to a silicon atom through an intervening carbon atom or through intervening carbon and oxygen atoms.

6. A method of preparation of an adhesive composition according to any one of claims 1 to 5 comprising combining the mentioned components thereof.

7. The use of an adhesive composition according to any one of claims 1 to 5 to form a coating or sealing portion on a substrate, by curing the composition in contact therewith.

8. A product comprising a coating or sealing portion of a composition according to any one of claims 1 to 5 in cured form.

9. A detector or sensor in which an adhesive composition of any one of claims 1 to 5 is used as a protective sealant or coating.

10. A detector or sensor of claim 9 which is a pressure sensor for an automotive control system, a gas concentration detector or a temperature sensor.

11. A printing or copying machine in which an adhesive composition of any one of claims 1 to 5 is used as a protective sealant or coating.

12. The printing or copying machine of claim 11 which is an ink jet printer or a laser printer.

13. A component for a printing or copying machine in which component an adhesive composition according to any one of claims 1 to 5 is used as a protective sealant or coating.

14. A component of claim 13 which is a roller or belt for a printer or copier.
